Europäisches Patentamt

(19) European Patent Office

Office européen des brevets

(11) Publication number: **0 069 555**
**B1**

## (12) EUROPEAN PATENT SPECIFICATION

(45) Date of publication of patent specification: **25.09.85**

(21) Application number: **82303477.2**

(22) Date of filing: **02.07.82**

(51) Int. Cl.⁴: **C 01 B 3/00, C 01 B 3/56**

(54) Hydridable pellets.

(30) Priority: **02.07.81 US 279713**

(43) Date of publication of application:
**12.01.83 Bulletin 83/02**

(45) Publication of the grant of the patent:
**25.09.85 Bulletin 85/39**

(84) Designated Contracting States:
**BE DE FR GB IT NL SE**

(56) References cited:
**GB-A-2 067 983**
**US-A-4 036 944**
**US-A-4 276 060**

**JOURNAL OF THE LESS-COMMON METALS,
vol.74, no.2, October 15, 1980, Elsevier Sequoia
S.A., (NL), M. RON et al.: "Preparation and
properties of porous metal hydride compacts",
pages 445 to 448**
**CHEMICAL ABSTRACTS, vol.95, no.14, October
5, 1981, page 175, abstract no.118376s,
Columbus, Ohio (US), E. SCHMIDT-IHN et al.:
"Storage on hydrides for electrical load
equilibration"**

(73) Proprietor: **INCO SELECTIVE SURFACES, INC.
681 Lawlins Road
Wyckoff New Jersey 07481 (US)**

(72) Inventor: **Goodell, Paul Douglas
234 Mulberry Place
Ridgewood, NJ 07450 (US)**
Inventor: **Huston, Ernest Lee
Box 38B Maplebrook
Tuxedo Park, NY 10987 (US)**
Inventor: **Rudman, Peter Strom
321 Cupsaw Drive
Ringwood, NJ 07456 (US)**
Inventor: **Sandrock, Gary Dale
113 Kraft Place
Ringwood, NJ 07456 (US)**

(74) Representative: **Knowles, Audrey Elizabeth et al
624 Pershore Road
Selly Park Birmingham B29 7HG (GB)**

**Description**

The present invention relates to hydridable pellets which are particularly useful in operating cyclic hydride/dehydride reactions.

Hydridable materials, such as $LaNi_5$, and other materials having a similar structure, are capable of absorbing large amounts of hydrogen exothermically and reversibly releasing the hydrogen endothermically. Large scale industrial applications for hydridable materials have been hampered by the engineering problems encountered in dealing with the materials. In particular an industrial size device for handling substantial quantities of hydrogen would require transport of substantial quantities of heat into and out of the device depending on whether the device was in a hydriding or dehydriding mode. This normally would necessitate an elaborate heat transfer system involving tubes, valves and pumps in order for the device to operate.

A further problem is caused by the cracking and decrepitation of hydridable materials during repeated hydriding/dehydriding cycles. This is apparently due to the effect of the change of volume of the hydridable material, which may initially have a large particle size, during the hydriding and dehydriding cycles. The finely divided debris resulting from the decrepitation reaction provides problems in containment and complicates the design of the containment device. Moreover the fine decrepitated powder tends to pack in the containment device with high impedance to gas flow, and undesirable increases in pressure within the device unless appropriate design steps are taken to compensate for this effect. It has been found that the problem of moving heat in and out of a device containing the hydridable material can be minimized by including a heat storage medium with a hydride former as disclosed and claimed in European Patent No. 0 015 106. This does not overcome the decrepitation problem however.

U.S. patent No. 4 110 425 discloses that various hydrogen-storage materials of types such as magnesium, titanium, vanadium and niobium and alloys such as those of lanthanum and titanium with cobalt, nickel and iron may be bonded with various plastics and remain useful as hydrogen-storage media. However, plastics have limited strength and limited capability to resist elevation in temperature and plastic-bonded pellets placed in beds of any substantial size and weight tend to slump or creep with accompanying reduction in bed permeability to gas flow. Furthermore, gas evolution from the plastic binder can occur over an extended period and such gas evolution could serve as a contaminant in applications wherein hydrogen of high purity is required. U.S. patents No. 3 669 745 and No. 3 881 960 are directed to electrodes for use in galvanic cells comprising mixtures of a hydride former and of another metal in powder form which are pressed and sintered. U.S. patent No. 4 036 944 is also directed to hydrogen sorbent compositions comprising lanthanum-nickel bonded with a plastic composition. This patent also discloses the inclusion of minor amounts of copper, nickel and iron metals in the plastic bonded compact. The patent reports on a failed experiment wherein 50 wt. percent of copper powder was introduced with the $LaNi_5$. After two cycles of hydrogenation the resulting compacts disintegrated.

Ron et al, in their paper "Preparation and Properties of Porous Metal Hydride Compacts" Journal of the Less-Common Metals, 74 (1980) 445—448 has proposed that hydrides of $LaNi_5$ be compacted with a minor proportion of metal to form a solid porous metallic matrix hydride pellet. Pellets produced from $LaNi_5$ and aluminium containing 30 weight % of aluminium were shown to withstand 20 repeated dehydriding cycles in tests run at 8 and 13 atmospheres hydrogen starting at 22°C. In such conditions considerable heat may be generated and absorbed by the hydride without limiting its absorption capacity.

The present invention is based on the discovery that a heat-ballasted hydridable compact can be produced which may improve the kinetics of hydride/dehydride reactions and which can be used in mixed gas streams containing hydrogen and other impurity gases.

According to the present invention there is provided a heat ballasted hydridable pellet comprising a hydridable metal or alloy being metallurigically bonded to a heat ballast material which consists of iron, nickel, copper or aluminium or mixtures or alloys thereof in the form of a porous pellet, characterised in that it contains at least 60% by volume of the heat ballast material, the hydridable metal or alloy being selected from the group of magnesium, titanium, vanadium, niobium and palladium and binary, tertiary and more complex alloys of rare earths, titanium, cobalt, nickel, iron, zirconium, magnesium, calcium, manganese and mixtures thereof.

Pellets of the present invention may also contain up to 30% by volume of an inert powdered refractory oxide such as alumina, silica or magnesia. However, sufficient metal binder should be present to provide a strong metal bonded pellet.

The pellets are individually porous, and beds made of the individual pellets are porous on a macroscale. The porous pellets of the invention are highly resistant to decrepitation over long periods of time and beds made of the compacts are readily permeable to gas passage.

By hydridable metal as used herein is meant metals or alloys able to absorb hydrogen to form a hydride and reversibly desorb hydrogen therefrom. Some examples according to the invention are $LaNi_5$, $LaNi_{4.7}Al_{0.3}$, $LaNi_{5-x}Al_x$, $LaCo_5$, $LaNi_3Co_2$, $FeTi$, $(Fe_{1-x}, Mn_x)Ti$, $Mg_2Ni$ and $Ti_2Ni$. The heat ballast metal consists of iron, nickel, copper or aluminium or alloys or mixtures thereof and also serves as a binder to hold the composite, porous, powder metallurgical structure together. Care should be taken to avoid the potential for exothermic reaction between the metal binder or ballast and the hydridable material. For example, a reaction between aluminium and $LaNi_5$ may initiate at temperatures as low as 300°C. The ballast material may also incorporate other metals or alloys which have the potential for absorbing or catalytically converting certain gaseous impurities in the hydrogen feed stream which could poison the hydridable material.

Pellets of the invention are prepared by mixing a powdered hydridable material having a particle size of 1 to 700 microns, preferably 10 to 300 microns, with ballast metal or alloy powder having a particle size in the same region, pressing for example at pressures up to about 137.9 N/mm², and sintering, where necessary, at a temperature in the range 400 to 1100°C. The resulting compact may be crushed to provide pellets of average size of 1 to 10 mm. Where inert refractory material is sintered with the hydridable material and heat-ballast metal powder, it should have a particle size in the range 50 to 500 microns. Crushing of larger compacts to provide pellets also provides fresh, fractured faces and overcomes metal smearing effects of the powder mix against the die which may occur with softer metals such as aluminium and copper. Alternatively, pellets of 2 to 3 mm may be formed directly by powder metallurgical methods. Techniques such as tabletting, briquetting and roll compaction, may be employed. The porosity of individual pellets is usually in the range 20% to 60% pores or voids. Preferably the porosity is 20% to 40%, by volume. Such pellets are readily permeable to hydrogen. In the physical structure of the pellet itself, the hydridable particles are readily available for contact with gas and despite the fact that there is a smaller amount of hydridable material than of ballast material in the pellet the hydriding and dehydriding reactions proceed rapidly. Since the ballast material is in the contact with the hydridable material, flow of heat from the hydridable material to the ballast material or in reverse direction involves a very short distance indeed, leading to improved kinetics.

In carrying out a hydriding-dehydriding process such as the recovery of substantially pure hydrogen from a hydrogen-containing gas stream also containing undesirable impurity gases, the hydrogen-containing stream will usually be under pressure. A hydride-dehydride device containing a bed of heat-ballasted hydridable material provided in accordance with the invention will have a theoretical maximum capacity for hydrogen, an ascertainable total heat of reaction for capacity storage and an ascertainable heat capacity. The bed will possess an equilibrium absorbing pressure which rises with temperature. Sufficient heat storage capacity should be available in the bed in relation to the quantity of hydridable material that the equilibrium absorbing pressure will not reach the supply pressure of hydrogen until 60% or more of the hydrogen storage capacity of the sorbent material is realized. Advantageously the heat storage capacity of the bed will be sufficient to permit absorption of the theoretical maximum heat of the hydrogen sorbing reaction without the equilibrium absorption pressure exceeding the supply pressure of the hydrogen gas. Once the bed is hydrided at the supply pressure of the hydrogen gas, hydrogen of substantially purity may be recovered from the bed using the stored reaction heat. The efficiency of hydrogen extraction is inversely proportional to the rate of hydrogen extraction. Auxiliary heat transfer means are not required, although such means, or insulation, may be used.

It has been found that in preparing pellets of the invention the oxygen content of the ballast metal powder should be carefully controlled. Thus, the oxygen content of the ballast metal powder should not exceed about 0.1% by weight. The oxygen content of more highly oxidized powders may be reduced by reduction in hydrogen at temperatures up to 500°C. Such a reducing step may involve some sintering of the powder and necessitate crushing to provide metal powder of the appropriate particle size. Of course in such a situation care needs to be taken to avoid oxidation of the metal powder during crushing or other processing to provide composite pellets. Such reoxidation can be corrected by moderate heating of the composite particles in a reducing atmosphere.

The presence of oxygen in pellets of the present invention has a drastic effect on the hydrogen capacity of the hydridable material in the compact. These hydridable materials are readily oxidizable. Unfortunately once oxidized the materials are no longer hydridable. It appears that hydrogen-reducible oxygen associated with the metal ballast is reduced when the bed is hydrided. Hydriding is accompanied by a rise in temperature and the water generated during reduction of the metal oxide apparently reacts with the hydridable material with accompanying loss of capacity.

It will be appreciated that aluminium oxide and inert refractory powders are not reducible with hydrogen.

Some examples will now be described.

Example I

A number of pellets were produced in accordance with the invention using varying amounts of powdered iron, copper, aluminium and nickel as ballast metals. In each case LaNi₅ was employed as the hydridable material. The metal powders had fine particle sizes of less than 44 microns and the LaNi₅ was reduced to a fine particle size by several hydriding-dehydriding cycles. The powders were mixed by wire blending and the mixes were pressed at 137.9 N/mm² isostatically to provide billets of various sizes up to 10 kg. Pressing and sintering parameters are shown in Table I. The billets were crushed prior to use to pellets having a particle size range of about −4, +20 mesh (0.84 to 4.76 mm).

The capacity data in Table I which is tabulated in the column ΔH/M in which H is equal to the gram atoms of hydrogen in the hydridable material and M is equal to the gram atoms of hydridable material were obtained in closed or deadend apparatus over at least five hydriding-dehydriding cycles under quasi-isothermal conditions. It is to be seen from the data that the highest ΔH/M value is that obtained on

3

the aluminium bonded material, thereby indicating that, under the $\Delta H/M$ criterion, aluminium is the most satisfactory bonding metal to be used in pellets of the invention. It is possible that the basic reason for the superior performance of the aluminium bonded hydridable material is due to the fact that aluminium oxide has a high heat of formation and that oxygen transfer from the aluminium to the active element lanthanum of the hydridable material of the composite does not occur. In contrast metals such as nickel, copper and iron form oxides having relatively low heats of formation and in the presence of hydrogen the oxides of these metals are readily reduced with transfer of oxygen to the lanthanum or other active metal of the hydridable species in the composite. Such an oxygen transfer is accompanied by loss of capacity shown in Table I.

## TABLE I
### Pellet performance for alternate ballasts and alternate processing

| Indent. No. | W/o ballast | Pelletizing Pressure $N/mm^2$ | Sinter Tmp. °C in argon | $LaNi_5$ | $\Delta$ (H/M) | Pellet den. $g/cm^3$ prehyd. | Pellet den. $g/cm^3$ dehyd. | Max density $g/cm^3$ | Porosity % prehyd. | Porosity % dehyd. | Comments |
|---|---|---|---|---|---|---|---|---|---|---|---|
| LN-3 | 75 Fe | 154.4 | 760 | pulverised by prehydriding | 0.59 | | 3.92 | 7.29 | | 46.3 | 1.6 w/o Oxygen |
| LN-6 | 75 Cu | 154.4 | " | " | 0.89 | | 5.51 | 8.73 | | 36.9 | 0.48 w/o Oxygen |
| HR-462 | | | | | | | | | | | |
| LN-8 | 60 Al | 30.9 | 430 | " | 0.99 | 2.62 | 2.52 | 3.69 | 29.1 | 31.6 | |
| LN-12 | 82.5 Ni | 169.9 | 760 | " | 0.92 | 4.59 | | 8.77 | 47.6 | | 0.18 w/o Oxygen |
| LN-13 | " | 169.9 | " | .074—.149 mm | 0.92 | 5.15 | 4.90 | " | 41.3 | 44.1 | 0.12 w/o Oxygen |
| LN-14 | " | 586.9 | " | " | 0.89 | 6.30 | 5.97 | " | 28.1 | 31.9 | Chip before sinter |
| LN-16 | " | 247.1 | " | " | 0.79 | 6.00 | 5.53 | " | 31.6 | 37.0 | |
| LN-17 | " | 247.1 | " | 0.59—1.41 mm | 0.29 | 6.00 | | " | 31.6 | | |
| LN-18 | " | 247.1 | " | <1.41 mm | 0.66 | 5.76 | 5.25 | " | 34.3 | 40.2 | |
| LN-15 | 82.5 Cu | 586.9 | " | 0.149—0.59 mm | 0.73 | 6.99 | 6.78 | 8.79 | 20.5 | 22.9 | Chip before sinter |
| LN-19 | " | 386.1 | " | " | 0.61 | 6.74 | 6.45 | " | 23.4 | 26.6 | |
| HR-470 | | | | | | | | | | | |
| LN-20 | " | 386.1 | " | 0.59—1.41 mm | 0.20 | 6.99 | 6.66 | " | 20.5 | 24.2 | |
| LN-21 | " | 386.1 | " | <1.41 mm | 0.47 | 6.47 | 6.36 | " | 26.6 | 27.6 | |
| HR-421 | 75 Ni | | " | pulverised by prehydriding | 0.99 | | 5.12 | 8.71 | | 41.2 | |

d=density=8.20 $(LaNi_5)$=8.90 (Ni)=8.92 (Cu)=7.03 (Fe)=2.70 (Al)   l/d max=[(w/oA)/$d_A$+(w/oB)$d_B$]/100 (A=ballast B=$LaNi_5$)   Porosity=l—d/$d_{max}$

Example II

The kinetics in hydride/dehydride reactions as between $LaNi_5$ as loose powder and the same quantity of $LaNi_5$ produced as powder metallurgy pellets with fine nickel powder in the ratio 25% $LaNi_5$ and 75% nickel by weight were compared. A dead-end reactor made from a 1.905 cm diameter tube having a wall thickness of 0.1715 cm immersed in a 25°C water bath was used. A quantity of 8 g $LaNi_5$ was used in each test. Times for half reactions ($\Delta H/M=0.5$) were used to measure reaction kinetics. The following results were obtained:

TABLE II
Absorption
half-time (minutes)

| $P/P_A$ | Powder | Ballasted pellet |
|---|---|---|
| 1.5 | 2.3 | 0.75 |
| 2.0 | 1.3 | 0.25 |
| 4.0 | 0.41 | 0.045 |
| 6.0 | 0.25 | 0.019 |

Desorption

| $P/P_D$ | Powder | Ballasted pellet |
|---|---|---|
| 0.5 | 2.4 | 1.3 |
| 0.2 | 1.3 | 0.70 |
| 0.07 | 0.92 | 0.52 |

$P_A$=measured absorption plateau pressure at 25°C.
$P_D$=measured desorption plateau pressure at 25°C.

Two factors are believed to account for the improvement in kinetics which is made evident by the markedly reduced times shown in Table II. These are the intimate mixing between the hydride-former particles and the thermal ballast particles and the reduced pressure drop in the pellet bed.

**Claims**

1. A heat ballasted hydridable pellet comprising a hydridable metal or alloy being metallurgically bonded to a heat ballast material which consists of iron, nickel, copper or aluminium or mixtures or alloys thereof in the form of a porous pellet, characterised in that it contains at least 60% by volume of the heat ballast material, the hydridable metal or alloy being selected from the group of magnesium, titanium, vanadium, niobium and palladium and binary, tertiary and more complex alloys of rare earths, titanium, cobalt, nickel, iron, zirconium, magnesium, calcium, manganese and mixtures thereof.

2. A hydridable pellet as claimed in claim 1 in which the pellet also contains up to 30% by volume of an inert refractory metal oxide.

3. A hydridable pellet as claimed in claim 2 in which the refractory metal oxide is alumina, silica or magnesia.

4. The use of a heat ballasted hydridable pellet as claimed in any preceding claim as a hydrogen sorber in a process for extracting hydrogen from a gas stream containing hydrogen with or without other gases.

**Patentansprüche**

1. Hitzebeständiges hydrierbares Pellet aus einem hydrierbaren Metall oder einer hydrierbaren Legierung in metallurgischer Bindung mit Eisen, Nickel, Kupfer oder Aluminium einzeln oder nebeneinander als Wärmeleiter, dadurch gekennzeichnet, daß der Anteil des Wärmeleiters mindestens 60 Vol-% ausmacht und das hydrierbare Metall aus Magnesium, Titan, Vanadium, Niob und Palladium einzeln oder nebeneinander sowie einer mindestens binären Legierung aus Seltenen Erdmetallen, Titan, Kobalt, Nickel, Eisen, Zirkonium, Magnesium, Kalzium und Mangan einzeln oder nebeneinander besteht.

2. Hydrierbares Pellet nach Anspruch 1, gekennzeichnet durch 30 Vol-% eines inerten feuerfesten Metalloxyds.

3. Hydrierbares Pellet nach Anspruch 2, dadurch gekennzeichnet, daß das feuerfeste Oxyd aus Tonerde, Kieselsäure oder Magnesia besteht.

4. Verwendung eines hitzebeständigen hydrierbaren Pellets nach einem oder mehreren der Ansprüche 1 bis 3 als Wasserstoffabsorber in einem Verfahren zum Gewinnen von Wasserstoff aus einer Gasphase mit oder ohne andere Gase.

**0 069 555**

**Revendications**

1. Granule calorifique, à charge répartie, apte à former des hydrures, comportant un métal ou un alliage apte à former des hydrures lié à un matériau de charge calorifique qui consiste en du fer, du nickel, du cuivre ou de l'aluminium ou en des mélanges ou alliages de ces derniers, sous la forme d'une granule poreuse, caractérisée en ce qu'elle contient au moins 60% en volume du matériau calorifique de charge, le métal ou l'alliage apte à former des hydrures étant choisi dans le groupe du magnésium, du titane, du vanadium, du niobium et du palladium et des alliages binaires, tertiaires et plus complexes des terres rares, du titane, du cobalt, du nickel, du fer, du zirconium, du magnésium, du calcium, du manganèse et leurs mélanges.

2. Granule apte à former des hydrures selon la revendication 1, caractérisée en ce que la granule contient également jusqu'à 30% en volume d'un oxyde de métal réfractaire inerte.

3. Granule apte à former des hydrures selon la revendication 2, caractérisée en ce que l'oxyde de métal réfractaire est de l'alumine, de la silice ou de la magnésie.

4. Utilisation d'une granule calorifique, à charge répartie, apte à former des hydrures, conforme à l'une des revendications précédentes, comme sorbant d'hydrogène, dans un processus pour extraire de l'hydrogène d'un courant de gaz contenant de l'hydrogène avec ou sans autre gaz.

7